# EUROPÄISCHE PATENTSCHRIFT

(11) **EP 2 306 219 B1**
(45) Veröffentlichungstag und Bekanntmachung des Hinweises auf die Patenterteilung: **22.08.2012**
(21) Anmeldenummer: 10450149.9
(22) Anmeldetag: 28.09.2010
(51) Int. Cl.: G01S 7/487, G01S 17/42, G01S 17/89

(54) **Laserscanner und Verfahren zum Laserscannen**
Laser scanner and laser scanning method
Scanner laser et procédé d'acquisition laser

(30) Priorität: 05.10.2009 AT 15632009
(43) Veröffentlichungstag der Anmeldung: 06.04.2011
(73) Patentinhaber: Riegl Laser Measurement Systems GmbH, 3580 Horn (AT)
(72) Erfinder: Pfennigbauer, Martin, 3430 Tulln (AT); Ullrich, Andreas, 3003 Gablitz (AT); Ederer, Gerhard, 3841 Windigsteig (AT)
(74) Vertreter: Weiser, Andreas

(56) Entgegenhaltungen:
- EP-A2- 1 329 739
- US-B1- 6 304 321

## Beschreibung

Die vorliegende Erfindung betrifft einen Laserscanner, mit einem Lasersender zum Aussenden von Laserimpulsen zu vorgebbaren Sendezeitpunkten, einem Laserempfänger zum Empfangen von Laserimpulsen und Digitalisieren des Empfangssignals zu einer Folge von Abtastwerten, und einer daran angeschlossenen Meßeinrichtung zur Laufzeitmessung der Laserimpulse durch Ermitteln der Auftrittszeitpunkte von Empfangsimpulsen in der Abtastwertfolge bezüglich der Sendezeitpunkte der Laserimpulse, wobei die Meßeinrichtung die gemessenen Laufzeiten auf einer Schnittstelle des Laserscanners ausgibt. Die Erfindung betrifft ferner ein Verfahren zum Laserscannen.

Die Laufzeit eines an einem Ziel reflektierten Laserimpulses ist proportional der Entfernung zum Ziel, sodaß in der vorliegenden Beschreibung die Begriffe "Laufzeit" und "Entfernung" synonym und austauschbar verwendet werden.

Mittels einer Vielzahl in verschiedene Richtungen ausgesandter Laserimpulse können Laserscanner einen 3D-Datensatz ("3D-Punktewolke") ihrer Umgebung erstellen. So beschreiben die EP 1 329 739 A2 und die US 6,304,321 B1 Laserscanner zur Aufnahme von 3D-Objekträumen mittels Laufzeitmessung und die Digitalisierung der empfangenen Reflexionen. Solche herkömmlichen Laserscanner versagen jedoch bei Zielsituationen, bei denen ein ausgesandter Laserimpuls auf mehrere in seinem Strahlquerschnitt liegende Ziele mit derart geringen Entfernungsunterschieden trifft, daß die reflektierten Laserimpulse sich im Empfangssignal zu einem einzigen verbreiterten bzw. verzerrten Empfangsimpuls überlagern.

Zur korrekten Auswertung solcher Mehrzielsituationen wurden bereits verschiedene Lösungen vorgeschlagen. Ein bekanntes Verfahren ist die sog. Gauß'sche Dekomposition, bei welcher versucht wird, den verzerrten Empfangsimpuls durch eine Überlagerung von Gaußimpulsen variierender Amplitude und Zeitlage anzunähern, siehe in Wolfgang Wagner, Andreas Ullrich, Vesna Ducic, Thomas Melzer, Nick Studnicka, "Gaussian Decomposition and Calibration of a Novel Small-Footprint Full-Waveform Digitising Airborne Laser Scanner", ISPRS Journal of Photogrammetry and Remote Sensing, 2005.

Den bekannten Verfahren ist gemeinsam, daß sie ausgesprochen rechenintensiv und langwierig und daher während des Scanbetriebs des Laserscanners ("online") nicht durchführbar sind, sondern in einem späteren Auswerteschritt ("offline") durchgeführt werden müssen. Dafür müssen die Scannerrohdaten in einem Speicher des Laserscanners oder einem externen Datenrecorder für die spätere Offline-Auswertung aufgezeichnet werden. Beim 2D- bzw. 3D-Laserscannen einer realen Umgebung können so äußerst rasch enorme Datenmengen in der Größenordnungen von mehreren Terabyte anfallen. Dies erfordert einerseits einen entsprechend großen Speicher zur Online-Aufzeichnung und anderseits enorme Rechenleistung in der Offline-Auswertung, wie sie derzeit nur mit extrem kostenintensiven Server-Farmen erreichbar ist.

Die Erfindung setzt sich zum Ziel, einen Laserscanner und ein Laserscanverfahren zu schaffen, welche die Nachteile des geschilderten Standes der Technik überwinden. Insbesondere setzt sich die Erfindung zur Aufgabe, eine mehrzielfähige Laserscanlösung mit reduziertem Aufwand für 2D- und 3D-Laserscananwendungen zu schaffen.

Dieses Ziel wird in einem ersten Aspekt der Erfindung mit einem Laserscanner der einleitend genannten Art erreicht, der sich dadurch auszeichnet, daß die Meßeinrichtung dafür ausgebildet ist, zu jeder gemessenen Laufzeit auch ein Fehlermaß der Messung zu erzeugen und, wenn das Fehlermaß einen vorgegebenen Grenzwert übersteigt, auch den den betreffenden Empfangsimpuls enthaltenden Abschnitt der Abtastwertfolge auf der Schnittstelle auszugeben.

Die Erfindung beruht auf dem neuen Ansatz, nur die einer fehlerbehafteten Laufzeitmessung zugrundeliegenden Abschnitte der Abtastwertfolge, d.h. Scannerrohdaten, für eine Offline-Auswertung auszugeben bzw. zu speichern. Da dies in der Praxis nur einen relativ geringen Prozentsatz aller Messungen betrifft, können die Größe des Speichers bzw. die Bandbreite des Datenausgangs des Laserscanners im Vergleich zu den bekannten Lösungen auf einen Bruchteil reduziert werden. In gleicher Weise werden aber auch die Anforderungen an die Offline-Auswerteeinrichtung extrem reduziert, weil diese nur mehr die Rohdaten der fraglichen Meßwerte nachzuverarbeiten braucht. Kostspielige Server-Farmen sind hiefür nicht mehr notwendig, weil der Großteil der Auswertung bereits "online" vom Laserscanner durchgeführt wurde.

Bevorzugt ist die Meßeinrichtung auch dafür ausgebildet, die Auftrittszeitpunkte aus einer Minimalwertsuche der Vergleichsabweichungen zwischen Abschnitten der Abtastwertfolge und Referenzimpulsen variierender Zeitlagen - und bevorzugt variierender Amplituden - zu ermitteln, wobei die am Ende der Minimalwertsuche verbleibende Vergleichsabweichung das Fehlermaß ist. Insbesondere werden als Referenzimpulse bevorzugt Gaußimpulse eingesetzt.

Gemäß einer weiteren bevorzugten Ausführungsform der Erfindung ist die genannte Schnittstelle ein Speicher oder Datenträger des Laserscanners. Alternativ kann die Schnittstelle auch ein Datenausgang des Laserscanners sein.

Der Laserscanner der Erfindung kann für beliebige Anwendungen eingesetzt werden, beispielsweise als einfacher Entfernungsmesser ("1D-Laserscanner"), in welchem Fall seine Sende- und Empfangsrichtung gegenüber der Umgebung konstant ist, zur Abtastung einer Höhenprofillinie in der Umgebung ("2D-Laserscanner") oder zur Erstellung einer 3D-Punktewolke eines Umgebungsbereichs ("3D-Laserscanner").

Für 2D- und 3D-Anwendungen kann der Laserscanner sowohl stationär und sein Lasersendeempfänger abtastend beweglich sein, als auch umgekehrt. Beispielsweise könnte der Laserscanner mit konstantgehaltenem Sendeempfänger seine Umgebung abtastend bewegt werden, oder z.B. in einer Richtung bewegt und sein Sendeempfänger gleichzeitig in einer anderen Richtung abtastend geführt werden.

Besonders bevorzugt sind der Lasersender und -empfänger mit zumindest einem Schwenkfreiheitsgrad versehen, um einen 2D- oder 3D-Laserscanner zu bilden.

In einem zweiten Aspekt schafft die Erfindung ein Verfahren zum Laserscannen, mit den Schritten:
Aussenden von Laserimpulsen zu vorgebbaren Sendezeitpunkten, Empfangen von Laserimpulsen und Digitalisieren des Empfangssignals zu einer Folge von Abtastwerten,
Laufzeitmessen der Laserimpulse durch Ermitteln der Auftrittszeitpunkte von Empfangsimpulsen in der Abtastwertfolge bezüglich der Sendezeitpunkte der Laserimpulse, wobei zu jeder gemessenen Laufzeit auch ein Fehlermaß der Messung erzeugt wird, und
Ausgeben der gemessenen Laufzeiten und, wenn das Fehlermaß einer gemessenen Laufzeit einen vorgegebenen Grenzwert übersteigt, auch des den betreffenden Empfangsimpuls enthaltenden Abschnitts der Abtastwertfolge auf einer Schnittstelle.

Hinsichtlich der Vorteile und weiterer Merkmale des erfindungsgemäßen Verfahrens wird auf die obigen Ausführungen zum Laserscanner verwiesen.

Die Erfindung wird nachstehend anhand eines in den beigeschlossenen Zeichnungen dargestellten Ausführungsbeispiels näher erläutert. In den Zeichnungen zeigt:
Fig. 1 ein Blockschaltbild des Laserscanners der Erfindung in Verbindung mit einer Auswerteeinrichtung;
die Fig. 2a - 2f Zeitdiagramme von im Rahmen des Laserscanners und Laserscanverfahrens der Erfindung auftretenden Signalen; und
die Fig. 3a und 3b Zeitdiagramme von im Rahmen der Auswerteeinrichtung auftretenden Signalen.

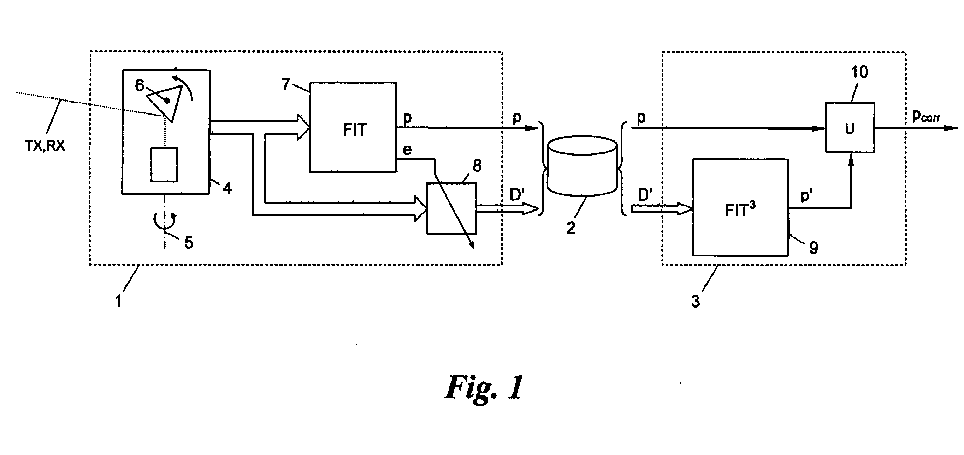

In Fig. 1 ist ein Laserscanner 1 gezeigt, der über eine Schnittstelle 2 mit einer Auswerteeinrichtung 3 in Verbindung steht. Die Schnittstelle 2 kann sowohl ein interner Speicher oder entfernbarer Datenträger des Laserscanners 1 sein, der von der Auswerteeinrichtung 3 zu einem beliebigen späteren Zeitpunkt ("offline") ausgelesen wird, als auch ein bloßer Datenausgang des Laserscanners 1, an welchen ein Datenrecorder oder die Auswerteeinrichtung 3 "online" angeschlossen ist.

Der Laserscanner 1 umfaßt einen Sendeempfänger 4 herkömmlicher Art zum Aussenden von Laserimpulsen TX auf die Umgebung und zum Empfangen von umgebungsreflektierten Laserimpulsen RX. Der Lasersendeempfänger 4 ist in dem gezeigten Beispiel mit Schwenk- bzw. Rotationsfreiheitsgraden um zwei orthogonale Drehachsen 5, 6 versehen, um die Sende- und Empfangsrichtung der Laserimpulse TX, RX zu steuern und dadurch einen Bereich der Umgebung abzutasten.

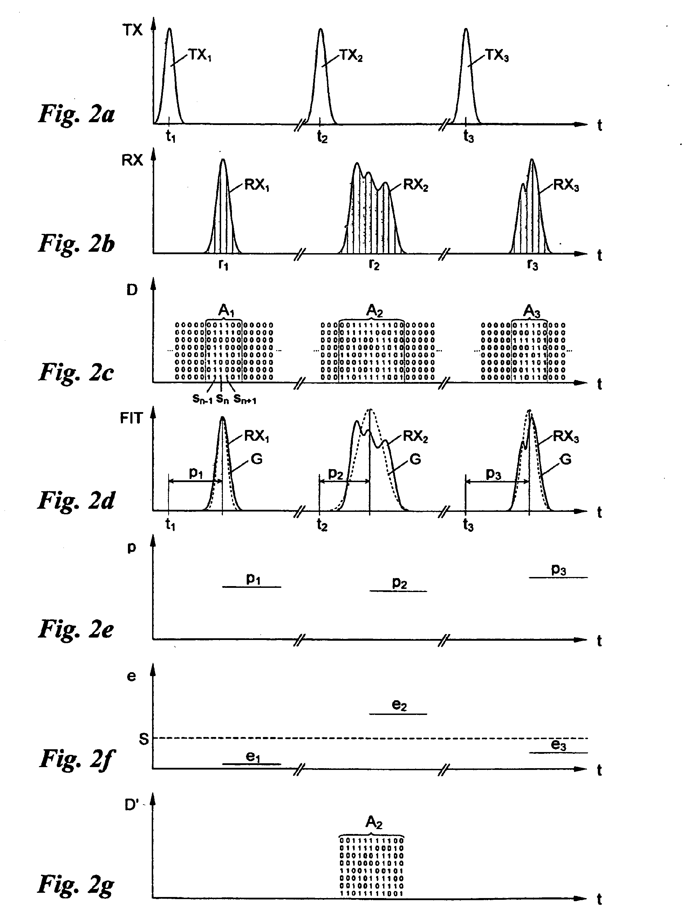

Fig. 2a zeigt drei beispielhafte ausgesandte Laserimpulse TXᵢ (hier: i = 1...3) zu Sendezeitpunkten tᵢ und Fig. 2b das Zeitdiagramm der von der Umgebung reflektierten und im Sendeempfänger 4 empfangenen Laserimpulse RXᵢ zu Auftrittszeitpunkten rᵢ. Die Empfangsimpulse RX₂ und RX₃ sind Beispiele für eine 3-Ziel bzw. 2-Ziel-Reflexion. Der Lasersendeempfänger 4 digitalisiert die empfangenen Laserimpulse RXᵢ, d.h. sein Empfangssignal, zu einem Datenstrom bzw. einer Folge D von Abtastwerten (Samples) Sₙ, z.B. mit einer Breite von 8 Bit kodiert, wie in Fig. 2c dargestellt.

Zurückkommend auf Fig. 1 ist an den Lasersendeempfänger 4 eine Meßeinrichtung 7 angeschlossen, welche in der Abtastwertfolge D die Auftrittszeitpunkte rᵢ der Empfangsimpulse RXᵢ ermittelt und in Relation zu den Sendezeitpunkten sᵢ der jeweiligen Sendeimpulse TXᵢ setzt, um die Laufzeiten pᵢ der Laserimpulse Txᵢ zu ermitteln. Gleichzeitig gibt die Meßeinrichtung 7 zu jeder gemessenen Laufzeit pᵢ auch ein Fehlermaß eᵢ aus. Das Fehlermaß eᵢ ist umgekehrt proportional zur Qualität der jeweiligen Laufzeitmessung.

Die genannte Ermittlung der Auftrittszeitpunkte rᵢ der Empfangsimpulse RXᵢ kann im einfachsten Fall z.B. durch eine Schwellwert- oder Flankendetektion in der Abtastwertfolge D erfolgen. Das Fehlermaß eᵢ ist dann beispielsweise die Impulsbreite zwischen den Flanken, d.h. je breiter der Empfangsimpuls RXᵢ im Vergleich zu dem Sendeimpuls TXᵢ ist, desto ungenauer ist seine zeitliche Bestimmung und desto größer ist das Fehlermaß eᵢ der Messung. Bevorzugt führt die Meßeinrichtung 7 jedoch einen Vergleich der Empfangsimpulse RXᵢ mit Referenzimpulsen G, insbesondere Gaußimpulsen, durch. Dabei werden die Zeitlage und Amplitude eines Referenzimpulses G so lange verändert, bis die Vergleichsabweichung mit dem Empfangsimpuls RXᵢ minimal ist ("Gauß-Fit"), siehe Fig. 2d. Als Maß für die Vergleichsabweichung kann dabei z.B. die minimal erzielbare Summe der quadratischen Abweichungen zwischen dem betreffenden Abschnitt Aᵢ der Abtastwertfolge und dem Referenzimpuls G bei einer bestimmten Amplitude und Zeitlage pᵢ des Referenzimpulses G herangezogen werden. Die am Ende der Minimalwertsuche verbleibende Vergleichsabweichung, d.h. die minimal erzielte Abweichung, stellt das Fehlermaß eᵢ der gemessenen Laufzeit pᵢ dar.

Auf Grundlage des Fehlermaßes eᵢ einer gemessenen Laufzeit pᵢ wird anschließend die Ausgabe der Abtastwertfolge D auf die Schnittstelle 2 selektiv gesteuert, siehe Datenfilter 8: Wenn das Fehlermaß eᵢ einer gemessenen Laufzeit pᵢ einen vorgegebenen Grenzwert S übersteigt, dann - und nur dann - wird auch der den betreffenden Empfangsimpuls RXᵢ enthaltende Abschnitt Aᵢ der Abtastwertfolge D auf der Schnittstelle 2 ausgegeben, wie in den Fig. 2e bis 2g gezeigt. Der solcherart reduzierte Rohdatenstrom D' umfaßt nur mehr Abtastwertfolgenabschnitte Aᵢ mit eᵢ > S.

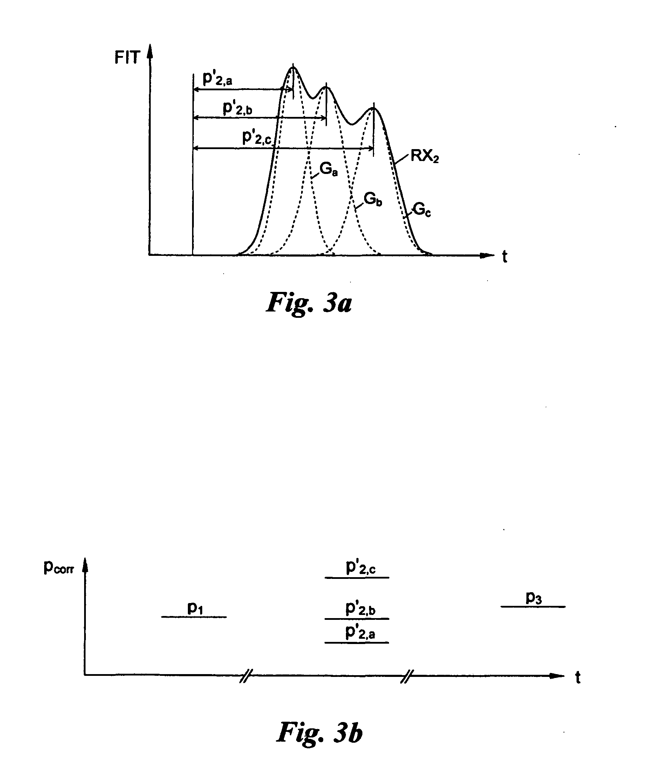

Die Fig. 1 und 3 zeigen eine beispielhafte Auswertung der Daten pᵢ, D' der Schnittstelle 2 in der Auswerteeinrichtung 3. Die Auswerteeinrichtung 3 kann z.B. in einem Block 9 eine zeitaufwendige und nicht in Echtzeit durchführbare Gauß'sche Dekomposition des Abschnitts A₂ der Abtastwertfolge D' durchführen, indem sie zwei oder mehrere (hier: drei) Gaußimpulse Gₐ, G_{b}, G_{c} jeweils variierender Amplitude und Zeitlage überlagert, um den Empfangsimpuls RX₂ anzunähern und aufzulösen (Fig. 3a). Dadurch können aus dem Empfangsimpuls RX₂ einzelne Laufzeiten p'_{2,a}, p'_{2,b} und p'_{2,c} ermittelt werden, welche auf die 3-Ziel-Reflexion des Laserimpulses TX₂ zurückgehen. Diese ersetzen die zuvor vom Laserscanner 1 fehlerhaft gemessene Laufzeit p₂, siehe Vereinigungsblock 10, um daraus eine Folge von korrigierten gemessenen Laufzeiten p_{corr} zu erzeugen (Fig. 3b).

Die Erfindung eignet sich auch für andere und komplexere Arten von Auswerteverfahren, welche die Auswerteeinrichtung 3 in ihrem Block 9 durchführen kann.

Die Erfindung ist demgemäß nicht auf die dargestellten Ausführungsbeispiele beschränkt, sondern umfaßt alle Varianten und Modifikationen, die in den Rahmen der angeschlossenen Ansprüche fallen.

## Patentansprüche

1. Laserscanner, mit einem Lasersender (4) zum Aussenden von Laserimpulsen (TXᵢ) zu vorgebbaren Sendezeitpunkten (tᵢ), einem Laserempfänger (4) zum Empfangen von Laserimpulsen (RXᵢ) und Digitalisieren des aus den empfangenen Laserimpulsen gebildeten Empfangssignals zu einer Folge (D) von Abtastwerten (sᵢ), und einer daran angeschlossenen Meßeinrichtung (7) zur Laufzeitmessung der Laserimpulse (TXᵢ) durch Ermitteln der Auftrittszeitpunkte (rᵢ) von Empfangsimpulsen (RXᵢ) in der Abtastwertfolge (D) bezüglich der Sendezeitpunkte (tᵢ) der Laserimpulse (TXᵢ), wobei die Meßeinrichtung (7) die gemessenen Laufzeiten (pᵢ) auf einer Schnittstelle (2) des Laserscanners (1) ausgibt, **dadurch gekennzeichnet, daß** die Meßeinrichtung (7) dafür ausgebildet ist, zu jeder gemessenen Laufzeit (pᵢ) auch ein Fehlermaß (eᵢ) der Messung zu erzeugen und, wenn das Fehlermaß (eᵢ) einen vorgegebenen Grenzwert (S) übersteigt, auch den den betreffenden Empfangsimpuls (RXᵢ) enthaltenden Abschnitt (Aᵢ) der Abtastwertfolge (D) auf der Schnittstelle (2) auszugeben.

2. Laserscanner nach Anspruch 1, **dadurch gekennzeichnet, daß** die Meßeinrichtung (7) ferner dafür ausgebildet ist, die Auftrittszeitpunkte (rᵢ) aus einer Minimalwertsuche der Vergleichsabweichungen zwischen Abschnitten (Aᵢ) der Abtastwertfolge (D) und Referenzimpulsen (G) variierender Zeitlagen - und bevorzugt variierender Amplituden - zu ermitteln, wobei die am Ende der Minimalwertsuche verbleibende Vergleichsabweichung das Fehlermaß (eᵢ) ist.

3. Laserscanner nach Anspruch 2, **dadurch gekennzeichnet, daß** die Referenzimpulse (G) Gaußimpulse sind.

4. Laserscanner nach einem der Ansprüche 1 bis 3, **dadurch gekennzeichnet, daß** die Schnittstelle (2) ein Speicher oder Datenträger des Laserscanners (1) ist.

5. Laserscanner nach einem der Ansprüche 1 bis 3, **dadurch gekennzeichnet, daß** die Schnittstelle (2) ein Datenausgang des Laserscanners (1) ist.

6. Laserscanner nach einem der Ansprüche 1 bis 5, **dadurch gekennzeichnet, daß** der Lasersender und -empfänger (4) mit zumindest einem Schwenkfreiheitsgrad (5, 6) versehen sind, um einen 2D- oder 3D-Laserscanner zu bilden.

7. Verfahren zum Laserscannen, mit den Schritten:
Aussenden von Laserimpulsen (TXᵢ) zu vorgebbaren Sendezeitpunkten (tᵢ), Empfangen von Laserimpulsen (RXᵢ) und Digitalisieren des aus den empfangenen Laserimpulsen gebildeten Empfangssignals zu einer Folge (D) von Abtastwerten (sᵢ),
Laufzeitmessen der Laserimpulse (TXᵢ) durch Ermitteln der Auftrittszeitpunkte (rᵢ) von Empfangsimpulsen (RXᵢ) in der Abtastwertfolge (D) bezüglich der Sendezeitpunkte (tᵢ) der Laserimpulse (TXᵢ), wobei zu jeder gemessenen Laufzeit (pᵢ) auch ein Fehlermaß (eᵢ) der Messung erzeugt wird, und
Ausgeben der gemessenen Laufzeiten (pᵢ) und, wenn das Fehlermaß (eᵢ) einer gemessenen Laufzeit (pᵢ) einen vorgegebenen Grenzwert (S) übersteigt, auch des den betreffenden Empfangsimpuls (RXᵢ) enthaltenden Abschnitts (Aᵢ) der Abtastwertfolge (D) auf einer Schnittstelle (2).

8. Verfahren nach Anspruch 7, **dadurch gekennzeichnet, daß** die Auftrittszeitpunkte (rᵢ) aus einer Minimalwertsuche der Vergleichsabweichungen zwischen Abschnitten (Aᵢ) der Abtastwertfolge (D) und Referenzimpulsen (G) variierender Zeitlagen - und bevorzugt variierender Amplituden - ermittelt werden, wobei die am Ende der Minimalwertsuche verbleibende Vergleichsabweichung das Fehlermaß (eᵢ) bildet.

9. Verfahren nach Anspruch 8, **dadurch gekennzeichnet, daß** die Referenzimpulse (G) Gaußimpulse sind.

10. Verfahren nach einem der Ansprüche 7 bis 9, **dadurch gekennzeichnet, daß** die gemessenen Laufzeiten (pᵢ) und genannten Abschnitte (Aᵢ) der Abtastwertfolge (D) in einem Speicher (2) eines Laserscanners (1) gespeichert werden.

## Claims

1. Laser scanner, with a laser transmitter (4) for transmitting laser pulses (TXᵢ) at predeterminable transmission times (tᵢ), a laser receiver (4) for receiving laser pulses (RXᵢ) and digitizing the reception signal formed from the received laser pulses into a sequence (D) of sample values (sᵢ), and a measuring device (7) connected thereto for measuring the transit time of the laser pulses (TXᵢ) by determining the incidence times (rᵢ) of reception pulses (RXᵢ) in the sample value sequence (D) relative to the transmission times (tᵢ) of the laser pulses (TX;), wherein the measuring device (7) outputs the measured transit times (pᵢ) at an interface (2) of the laser scanner (1), **characterized in that** the measuring device (7) is constructed to also generate an error magnitude (eᵢ) of the measurement for each measured transit time (pᵢ), and if the error magnitude (eᵢ) exceeds a predetermined limit value (S), to also output the section (Aᵢ) of the sample value sequence (D) containing the respective transmission pulse (RXᵢ) at the interface (2).

2. Laser scanner according to Claim 1, **characterized in that** the measurement device (7) is further constructed to determine the incidence times (rᵢ) from a minimum value search of the comparative deviations between sections (Aᵢ) of the sample time sequence (D) and reference pulses (G) of varying time positions, and preferably varying amplitudes, wherein the comparative deviation remaining at the end of the minimum value search is the error magnitude (eᵢ).

3. Laser scanner according to Claim 2, **characterized in that** the reference pulses (G) are Gaussian pulses.

4. Laser scanner according to one of Claims 1 to 3, **characterized in that** the interface (2) is a memory or data carrier of the laser scanner (1).

5. Laser scanner according to one of Claims 1 to 3, **characterized in that** the interface (2) is a data output of the laser scanner (1).

6. Laser scanner according to one of Claims 1 to 5, **characterized in that** the laser transmitter and receiver (4) are provided with at least one degree of pivoting freedom (5, 6) in order to form a 2D or 3D laser scanner.

7. Method for laser scanning, with the steps:
transmitting laser pulses (TXᵢ) at predetermined transmission times (tᵢ), receiving laser pulses (RXᵢ) and digitizing the reception signal formed from the received laser pulses into a sequence (D) of sample values (sᵢ),
measuring the transit time of the laser pulses (TXᵢ) by determining the incidence times (rᵢ) of reception pulses (RXᵢ) in the sample value sequence (D) with respect to the transmission times (tᵢ) of the laser pulses (TXᵢ), wherein an error magnitude (eᵢ) of the measurement is generated for each measured transit time (pᵢ), and
outputting the measured transit times (pᵢ) and also the section (Aᵢ) of the sample value sequence (D) containing the respective reception pulse (RXᵢ) on an interface (2), if the error magnitude (eᵢ) of a measured transit time (pᵢ) exceeds a predetermined limit value (S).

8. Method according to Claim 7, **characterized in that** the incidence times (rᵢ) are determined from a minimum value search of the comparative deviations between sections (Aᵢ) of the sample time sequence (D) and reference pulses (G) of varying time positions, and preferably varying amplitudes, wherein the comparative deviation remaining at the end of the minimum value search is the error magnitude (eᵢ).

9. Method according to Claim 8, **characterized in that** the reference pulses (G) are Gaussian pulses.

10. Method according to one of Claims 7 to 9, **characterized in that** the measured transit times (pᵢ) and the aforementioned sections (Aᵢ) of the sample value sequence (D) are stored in a memory (2) of a laser scanner (1).

## Revendications

1. Scanner laser, comportant un émetteur laser (4) servant à émettre des impulsions laser (TXᵢ) à des instants d'émission (tᵢ) pouvant être prédéfinis, un récepteur laser (4) servant à recevoir des impulsions laser (RXᵢ) et à numériser le signal de réception formé à partir des impulsions laser reçues en une suite (D) de valeurs d'échantillonnage (sᵢ), et un dispositif de mesure (7) raccordé à ce dernier servant à mesurer le temps de parcours des impulsions laser (TXi) en déterminant les instants d'apparition (rᵢ) des impulsions de réception (RXᵢ) dans la suite de valeurs d'échantillonnage (D) par rapport aux instants d'émission (tᵢ) des impulsions laser (TXᵢ), dans lequel le dispositif de mesure (7) délivre les temps de parcours mesurés (pᵢ) sur une interface (2) du scanner laser (1), **caractérisé en ce que** le dispositif de mesure (7) est conçu pour générer également pour chaque temps de parcours (pᵢ) mesuré une mesure d'erreurs (eᵢ) de la mesure et, lorsque la mesure d'erreurs (eᵢ) dépasse une valeur limite (S) prédéfinie, pour délivrer également sur l'interface (2) la portion (Aᵢ) de la suite de valeurs d'échantillonnage (D) contenant l'impulsion de réception (RXᵢ) concernée.

2. Scanner laser selon la revendication 1, **caractérisé en ce que** le dispositif de mesure (7) est en outre conçu pour déterminer les instants d'apparition (rᵢ) à partir d'une recherche de valeur minimale des écarts de comparaison entre des portions (Aᵢ) de la suite de valeurs d'échantillonnage (D) et des impulsions de référence (G) des intervalles de temps variables - et de préférence des amplitudes variables -, l'écart de comparaison restant à la fin de la recherche de valeur minimale constituant la mesure d'erreurs (eᵢ).

3. Scanner laser selon la revendication 2, **caractérisé en ce que** les impulsions de référence (G) sont des impulsions de Gauss.

4. Scanner laser selon l'une quelconque des revendications 1 à 3, **caractérisé en ce que** l'interface (2) est une mémoire ou un support de données du scanner laser (1).

5. Scanner laser selon l'une quelconque des revendications 1 à 3, **caractérisé en ce que** l'interface (2) est une sortie de données du scanner laser (1).

6. Scanner laser selon l'une quelconque des revendications 1 à 5, **caractérisé en ce que** l'émetteur laser et le récepteur laser (4) présentent au moins un degré de liberté en rotation (5, 6), afin de former un scanner laser 2D ou 3D.

7. Procédé d'acquisition laser, comportant les étapes suivantes consistant à :
émettre des impulsions laser (TXᵢ) à des instants d'émission (tᵢ) pouvant être prédéfinis, recevoir des impulsions laser (RXᵢ) et numériser le signal de réception formé à partir des impulsions laser reçues en une suite (D) de valeurs d'échantillonnage (sᵢ),
mesurer le temps de parcours des impulsions laser (TXᵢ) en déterminant les instants d'apparition (rᵢ) des impulsions de réception (RXᵢ) dans la suite de valeurs d'échantillonnage (D) par rapport aux instants d'émission (tᵢ) des impulsions laser (TXᵢ), une mesure d'erreurs (eᵢ) de la mesure étant également générée à chaque temps de parcours (pᵢ) mesuré, et
délivrer les temps de parcours (pᵢ) mesurés, et, lorsque la mesure d'erreurs (eᵢ) d'un temps de parcours (pᵢ) mesuré dépasse une valeur limite (S) prédéfinie, délivrer également la portion (Aᵢ) de la suite de valeurs d'échantillonnage (D) sur une interface (2), laquelle portion contient l'impulsion de réception (RX¡) concernée.

8. Procédé selon la revendication 7, **caractérisé en ce que** les instants d'apparition (rᵢ) sont déterminés à partir d'une recherche de valeur minimale des écarts de comparaison entre des portions (Aᵢ) de la suite de valeurs d'échantillonnage (D) et des impulsions de référence (G) des intervalles de temps variables - et de préférence des amplitudes variables -, l'écart de comparaison restant à la fin de la recherche de valeur minimale constituant la mesure d'erreurs (eᵢ).

9. Procédé selon la revendication 8, **caractérisé en ce que** les impulsions de référence (G) sont des impulsions de Gauss.

10. Procédé selon l'une quelconque des revendications 7 à 9, **caractérisé en ce que** les temps de parcours (pᵢ) mesurés et lesdites portions (Aᵢ) de la suite de valeurs d'échantillonnage (D) sont stockés dans une mémoire (2) d'un scanner laser (1).
